# EUROPEAN PATENT APPLICATION

(11) **EP 2 711 804 A1**
(43) Date of publication of application: **26.03.2014**
(21) Application number: 12185883.1
(22) Date of filing: 25.09.2012
(51) Int. Cl.: G06F 3/01, G06F 3/0488, G06K 9/00

(54) **Method for providing a gesture-based user interface**

(71) Applicant: Advanced Digital Broadcast S.A., 1292 Chambesy (CH)
(72) Inventor: Wielgosz, Marcin, 65-119 Zielona Gora (PL)
(74) Representative: Pawlowski, Adam

(57) **Abstract**

A method for providing a gesture-based user interface for a device with a screen, comprising the steps of determining (303) a set of current context gestures that are acceptable in a current context of operation of the device and descriptors of the gestures, providing (304) a graphical icon for each current context gesture, the graphical icon indicating the shape of the gesture whereas the gesture is associated with at least one action related to the user interface, displaying (305) the graphical icons (411) and descriptors (412) for the current context gestures on the screen.

## Description

The present invention relates to gesture-based user interfaces for devices outputting a graphical user interface by means of an internal or an external display screen.

Gesture-based user interfaces become more and more popular for navigating various types of devices. In contrast to standard controls, such as a keyboard, a navigation pad or a joystick, gesture-based user interfaces provide much wider flexibility, including the possibility to define unlimited number of gestures that can be input by the user. However, the user, in particular a beginner in using a particular device, is usually able to learn only a small number of gestures and can be unaware of the other gestures that are available. Moreover, sophisticated applications handled by the device may require different gestures to be performed depending on the current context of the application, which further complicates the user interface.

Prior art graphical user interfaces (GUI) most frequently allow a user to define gestures and assign the defined gestures to selected events in the graphical user interface software. By means of such arrangement the user learns and remembers the defined gestures. However, this requires time, some expertise and good memory as there may be dozens of gestures per GUI. Hence the prior art systems are complex and not intuitive, especially when a situation is considered where there are multiple users of the prior art system.

It would be therefore desirable to improve a gesture-based user interface to make it easier to use by the user.

The object of the invention is a method for providing a gesture-based user interface for a device with a screen, comprising the steps of determining a set of current context gestures that are acceptable in a current context of operation of the device and descriptors of the gestures, providing a graphical icon for each current context gesture, the graphical icon indicating the shape of the gesture whereas the gesture is associated with at least one action related to the user interface, displaying the graphical icons and descriptors for the current context gestures on the screen.

Preferably, the set of current content gestures is determined by enquiring the operating system and software applications about currently handled inputs.

Preferably, the graphical icons have a transparent background and are displayed as an overlay on the current contents of the screen.

Preferably, the method is activated upon receiving an input gesture which does not correspond to any of the current context gestures.

Preferably, the display of the graphical icons is stopped upon receiving an input gesture which corresponds to one of the current context gestures.

Preferably, the method further comprises the step of selecting a predefined number of the gestures to be displayed on the screen.

Preferably, the gestures are predefined in a database comprising information on a gesture identifier, gesture segments and gesture icon.

Preferably, the database further comprises application-specific gestures input to the database upon execution of a software application and deleted from the database upon stopping of the application.

Another object of the present invention is a device having a gesture input interface and a display controller, the device comprising computer-implemented means for executing the method according to the invention.

Another object of the invention is a computer program comprising program code means for performing all the steps of the method according to the invention when said program is run on a computer, as well as a computer readable medium storing computer-executable instructions performing all the steps of the method according the invention when executed on a computer.

The object of the invention is shown by means of exemplary embodiment on a drawing, in which:
Fig. 1 shows schematically a structure of a device utilizing the gesture-based user interface,
Fig. 2 shows schematically the contents of a gestures database,
Fig. 3 shows the steps of a method for assisting the user in navigating the gesture-based user interface,
Fig. 4 shows an exemplary screen with gesture suggestions.

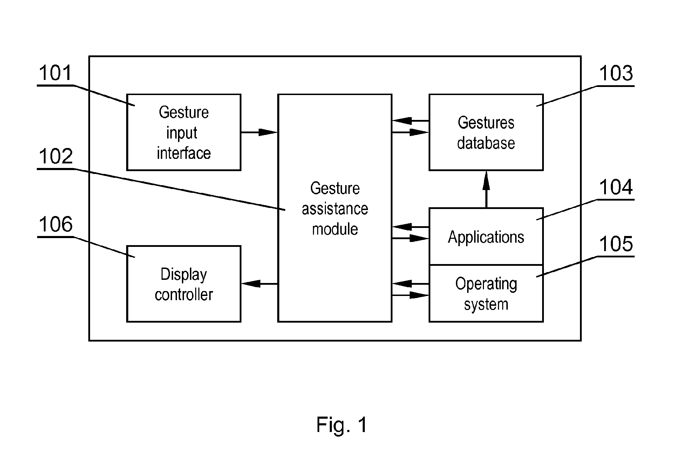

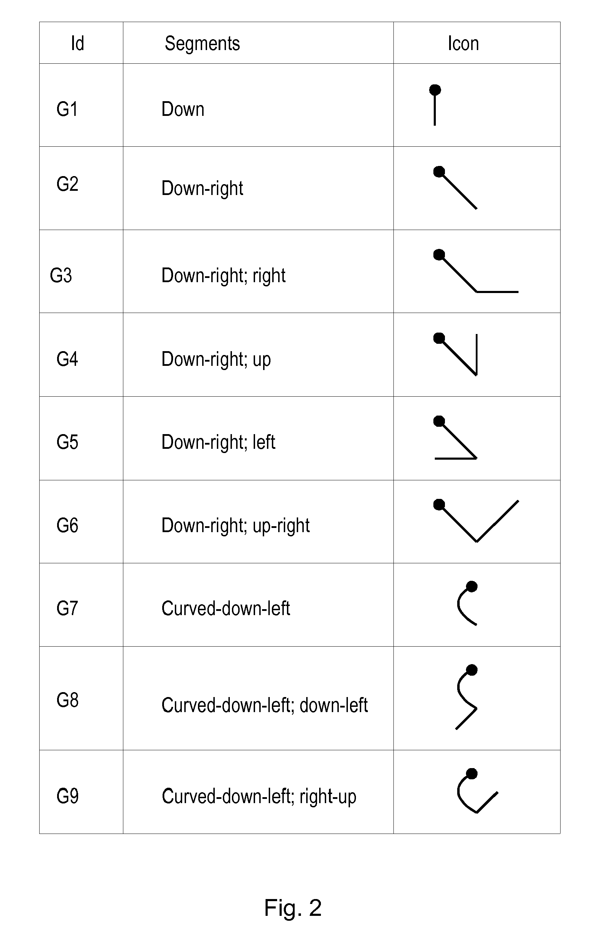

Fig. 1 shows schematically a structure of a device 100 utilizing the gesture-based user interface. The device comprises a gesture input interface 101 configured to receive gestures from the user and to detect the shapes of the gestures. The gesture input interface 101 may receive gestures from different devices such as a touch screen, a mouse, a remote control unit or the like. A gesture assistance module 102 is configured to operate the method according to the invention, i.e. to provide the user with assistance on the gestures available in the present context of the device. The gesture assistance module 102 uses a gestures database 103, described in details with reference to Fig. 2. The gestures database 103 will typically be stored in a non-volatile memory accessible to the gesture assistance module 102.

The operation of the device 100 is controlled by an operating system 104 and various applications 105. The device has a screen 106 on which graphical information can be presented.

Fig. 2 shows schematically exemplary contents of a portion of a gestures database 103 for a television receiver. Each gesture comprises an identifier, a list of segments constituting the gesture and a graphical icon representing the gesture. In another embodiment a change of direction in the description provided by segments parameter may also include definition of an angle such as down-left-280 - 300.

Additionally the gestures database 103 comprises references to actions associated with the gestures.

The graphical icon may be pre-generated and stored in the database or generated on demand based on the list of segments. The database 103 may comprise pre-generated gestures defined by the operating system 104 and may be supplemented by additional gestures from applications 105 operated by the operating system 104. Upon starting the application 105, the application may supplement the database 103 with a set of gestures unique for the particular application and after the application is closed, the unique set of gestures may be removed from the database.

The list of segments is an ordered list of items describing the movements to be performed by the user to correspond to a given gesture. The items may define straight-line vectors, curved vectors or other shapes, such as circles, waves, two-handed gestures etc, as known in the art.

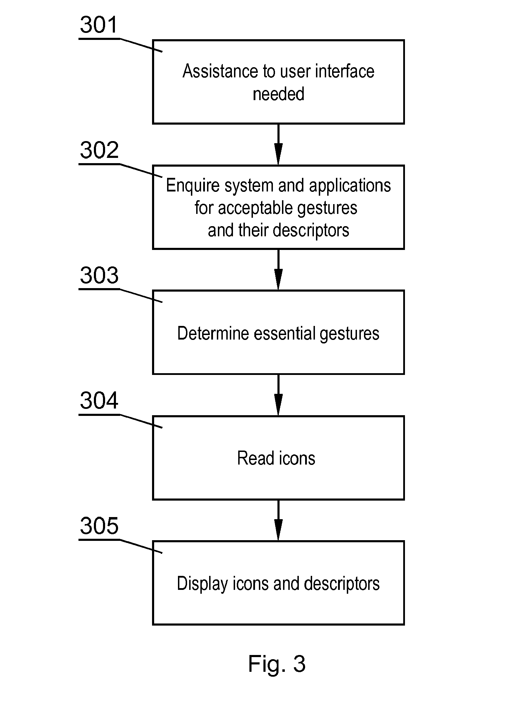

The gestures database 103 may comprise dozens of gestures, which can be problematic for the user to learn. Therefore, it would be desirable to provide the user with a hint of which gestures can be used in the present context of the operation of the device. The hint is provided by the gesture assistance module 102 operating the method shown in Fig. 3.

The gesture assistance module 102 is activated in step 301 upon determining, that assistance for handling the gesture-based interface is necessary. The activation may be invoked by the user by performing a specific gesture or pressing a key of a standard controller. Alternatively, the assistance may be invoked upon detecting inactivity of the user for a prolonged time in a context when the activity is expected. Furthermore, the assistance may be invoked upon detecting one or more gestures that are unrecognizable or detecting a gesture that is not handled in the current context. The assistance may be also activated upon each change of context that results in a change of set of handled gestures. In another embodiment each icon of the GUI is an icon from the gestures database 103. For example typical icon of a folder may be replaced with a gesture icon that will be associated with an action of opening the folder.

Next, in step 302 the gesture assistance module 102 enquires the operating system 104 and applications 105 for a list of gestures that are acceptable in the current context and descriptors of that gestures. The operating system 104 typically returns a list of standard, i.e. predefined, gesture identifiers. The applications may return a list of standard gesture identifiers and application-specific identifiers which are input to the database 103 upon starting the application. The descriptors of the gestures are content-specific. For example, the gestures shown in Fig. 2 may have the following context:
G1 - menu (handled by operating system, activation of main menu)
G2 - live tv (handled by operating system, activation of TV tuner)
G3 - premieres (handled by operating system, activation of VOD application)
G4 - featured (handled by operating system, activation of program reviews application)
G5 - grid (handled by operating system, activation of EPG application)
G6 - bookings (handled by operating system, activation of PVR application)
G7 - search (handled by currently active Internet browser application, activating search feature)
G8 - recent (handled by currently active Internet browser application, activating last viewed page)
G9 - keyword (handled by currently active Internet browser application, activating keyword search assistance function)

The descriptors may have a form of a simple text string (such as "menu", "live tv", "premieres" etc.) or a set of text strings presenting basic information (such as "menu", "live tv", "premieres" etc.) and extended information (such as "activation of main menu", "activation of TV tuner" etc.). Alternatively, the descriptors may have a form of graphic file.

Then, in step 303, a list of essential gestures may be determined in order to provide the user with a limited list of the gestures that are most likely to be used by the user. For example, the list may be limited to 5 gestures and may include standard operating system gestures such as "menu", "grid", "bookings" and 2 gestures defined by the currently active application(s) as most important, such as "search", "recent".

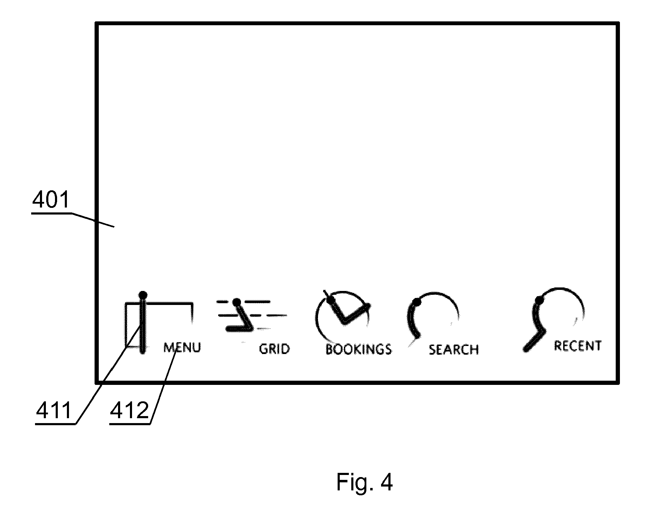

In step 304 the icons are read for the currently active gestures. The icons are then displayed in step 305 on the display screen together with the gesture descriptors. The icons 411 may be displayed together with the descriptors 412 as an overlay on the current screen contents 401, preferably next to one of the sides of the screen, for example as shown in Fig. 4. The descriptors may be displayed for a predetermined time or upon an action is taken by the user.

By presenting the gestures available in the present context in a form of icons on the display, the user is made aware of the functionality offered in the present context and it is easier for the user to learn to use of the device in an efficient manner.

It can be easily recognized, by one skilled in the art, that the aforementioned method for handling the gesture-based user interface may be performed and/or controlled by one or more computer programs. Such computer programs are typically executed by utilizing the computing resources of the device. The computer programs can be stored in a non-volatile memory, for example a flash memory or in a volatile memory, for example RAM and are executed by the processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

## Claims

1. A method for providing a gesture-based user interface for a device with a screen, comprising the steps of:
- determining (303) a set of current context gestures that are acceptable in a current context of operation of the device and descriptors of the gestures,
- providing (304) a graphical icon for each current context gesture, the graphical icon indicating the shape of the gesture whereas the gesture is associated with at least one action related to the user interface,
- displaying (305) the graphical icons (411) and descriptors (412) for the current context gestures on the screen.

2. The method according to claim 1, **characterized by** determining (303) the set of current content gestures by enquiring the operating system (104) and software applications (105) about currently handled inputs.

3. The method according to claim 1, wherein the graphical icons (411) have a transparent background and are displayed as an overlay on the current contents (401) of the screen.

4. The method according to claim 1, **characterized by** being activated upon receiving an input gesture which does not correspond to any of the current context gestures.

5. The method according to claim 1, **characterized by** stopping the display of the graphical icons upon receiving an input gesture which corresponds to one of the current context gestures.

6. The method according to claim 1, further comprising the step of selecting a predefined number of the gestures to be displayed on the screen.

7. The method according to claim 1, wherein the gestures are predefined in a database comprising information on a gesture identifier, gesture segments and gesture icon.

8. The method according to claim 7, wherein the database further comprises application-specific gestures input to the database upon execution of a software application and deleted from the database upon stopping of the application.

9. A device (100) having a gesture input interface (101) and a display controller (106), **characterized in that** it comprises computer-implemented means for executing the method according to any of claims 1-8.

10. A computer program comprising program code means for performing all the steps of the method according to any of claims 1-8 when said program is run on a computer.

11. A computer readable medium storing computer-executable instructions performing all the steps of the method according to any of claims 1-8 when executed on a computer.
